# EUROPEAN PATENT APPLICATION

(11) **EP 1 518 753 A2**
(43) Date of publication of application: **30.03.2005**
(21) Application number: 04022132.7
(22) Date of filing: 17.09.2004
(51) Int. Cl.: B60Q 1/14

(54) **Operation lever structure**

(30) Priority: 26.09.2003 JP 2003334966
(71) Applicant: NILES CO., LTD., Tokyo 143-0015 (JP)
(72) Inventor: Otani, Toshiya, Tokyo 143-0015 (JP); Aoki, Yo, Tokyo 143-0015 (JP)
(74) Representative: Luderschmidt, Schüler & Partner

(57) **Abstract**

In an operation lever structure in which an operation lever 10 is rotatably supported by a support shaft 9 in a predetermined direction, a movable member 15 is engaged with a front end 12a of the operation lever 10, and the movable body 15 slidingly moves in a predetermined direction by a rotating operation of the operation lever 10, the operation lever 10 includes a lever main body 11 rotated in a predetermined direction by the support shaft 9,an arm 12 slidingly supported to the lever main body 11 a front end 12a of which is engaged in a concave section 15a of the movable member 15, and a compression coil spring 16 to regularly urge the arm 12 in the direction of the movable member, wherein an entire length of the arm 12 of the operation lever is varied corresponding to a rotating operation angle of the operation lever 10.

## Description

### BACKGROUND OF THE INVENTION

### 1. Field of the Invention

The present invention relates to an operation lever structure and in particular, to an operation lever structure suitable for a combination switch device for an automobile or the like.

### 2. The Related Art of the Invention

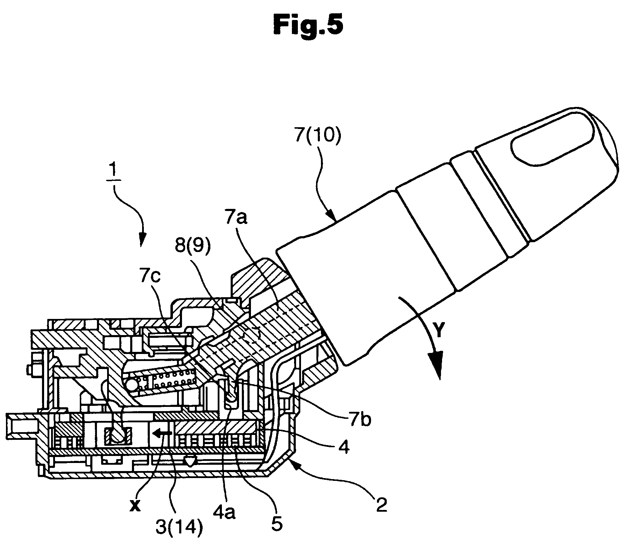

FIG.5 shows this kind of the operation lever structure (for example, refer to Japanese Unexamined Utility Model Publication No. 5 - 18981).

The operation lever structure is used in a combination switch device for an automobile 1 where a operation lever 7 is supported by a support shaft 8, the operation lever 7 being rotated relative to a casing 2 in the direction Y.

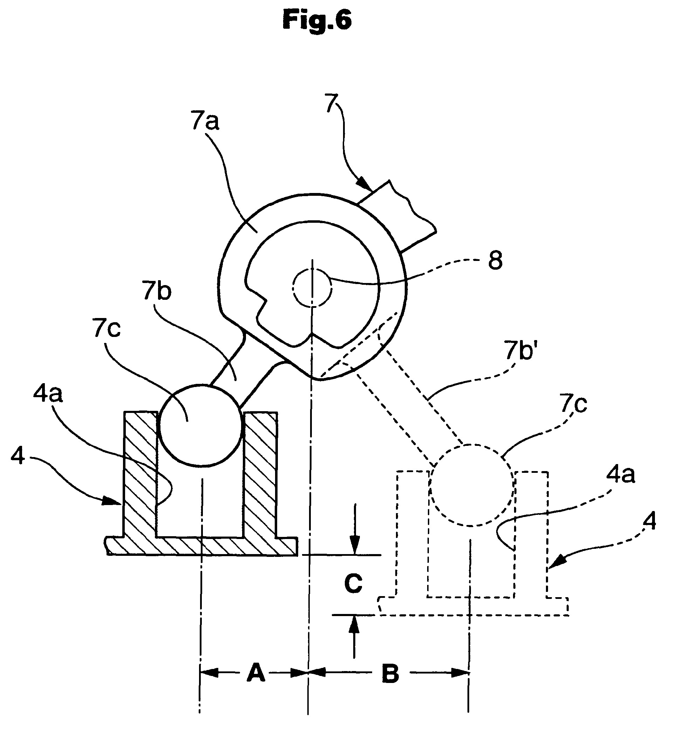

As shown in FIG. 5 and 6, the operation lever 7 equipped with a lever main body 7a which is rotated in the Y direction by the support shaft 8, and an arm section 7b formed integrally with the lever main body 7a.

A spherical front end 7c of the arm section 7b is engaged in a concave section 4a of a movable member 4 (movable body) which slides on a base 3 located in a lower section of the casing 2.

And when the operation lever 7 is rotated in the backward direction Y, the movable member 4 slides in the direction X by a predetermined amount A through the spherical front end 7c of the arm section 7b.

In addition, a plurality of stationary contact points (not shown) for a combination switch are disposed on the base member 3. And a plurality of movable contact points 5 contacting the stationary points are mounted in a lower section of the movable member 4.

### SUMMARY OF THE INVENTION

However, in the conventional operation lever structure, a combination switch is mounted in a narrow, small steering column and therefore, a length from the front end 7c of the operation lever 7 to the arm section 7b close to the support shaft 8 is set to be short to reduce a size of the structure. Accordingly a stroke amount A of the movable member 4 has to be short. For coping with this problem, as shown by a dotted line in FIG.6, if a long arm section 7b' is used, a stroke amount is increased to from a length A to a length B relative to the same rotation angle of the arm section 7b, but a large space to receive the movable member 4 or the like is required to correspond to an increased amount of the length in the arm section 7b', to increase a size of the entire structure.

And if the stroke amount of the movable member 4 is short, the number and the shape of the stationary contact points on the movable member 4 are limited and flexibility of a base design is limited for a secure on/off operations.

Accordingly the present invention is made to solve the foregoing problems and has an object of providing an operation lever structure in which an entire length of an operation lever varies with a rotating operation angle of the operation lever, thereby to increase a stroke amount of a movable body regardless of a small space.

One aspect of the invention is to provide an operation lever structure which comprises an operation lever supported by a support shaft to be rotated in a predetermined direction, an arm extending from the operation lever, and a movable body engaged with a front end of the arm to slidingly move the movable body in a predetermined direction by a rotating operation of the operation lever, wherein a length from the front end of the arm to the support shaft varies with a rotating operation angle of the operation lever.

Since in this operation lever structure an entire length of the operation lever varies with the rotating operation angle thereof, a stroke amount of the movable body is increased within a small space.

In the operation lever structure, the operation lever includes a lever main body rotated in a predetermined direction by the support shaft, the arm supported movably to the lever main body a front end of which is engaged with the movable body, and an urging member to regularly urge the arm in the direction of the movable body.

Since in this operation lever structure an entire length of the arm of the operation lever varies with a rotating operation angle of the lever main body of the operation lever, a stroke amount of the movable body is increased within a small space and with a simple structure.

In the operation lever structure, a hollow section is formed in the lever main body, as well as a hollow section is formed in at least a base side of the arm, wherein the base side of the arm is slidingly supported in the hollow section of the lever main body, and on the other hand, an urging member is interposed between the hollow section of the lever main body and the hollow section of the arm.

In the operation lever structure, due to a simple structure where the arm is slidingly supported in the hollow section of the lever main body and the urging member interposed between the hollow section of the lever main body and the hollow section of the arm regularly urges the arm, an entire length of the arm of the operation lever securely varies with a rotating operation angle of the lever main body of the operation lever, and a stroke amount of the movable body is certainly increased within a small space.

As explained above, according to one aspect of the invention, since the entire length of the operation lever varies with the rotating operation angle thereof, the stroke amount of the movable body can be increased within the small space.

Further, since the operation lever includes a lever main body rotated in a predetermined direction by the support shaft, an arm supported movably to the lever main body a front end of which is engaged with the movable body, and an urging member to regularly urge the arm in the direction of the movable body, an entire length of the arm of the operation lever varies with a rotating operation angle of the lever main body of the operation lever, a stroke amount of the movable body is increased within a small space.

Furthermore, since the base side of the arm is slidingly supported in the hollow section in the front side of the lever main body, as well as the urging member is interposed between the hollow section of the lever main body and the hollow section of the base side of the arm, an entire length of the arm of the operation lever securely varies with a rotating operation angle of the lever main body of the operation lever, and a stroke amount of the movable body is certainly increased within a small space.

These and other objects, features, aspects and advantages of the present invention will be become apparent to those skilled in the art from the following detailed description, which, taken in conjunction with the annexed drawings, discloses preferred embodiments of the present invention.

### BRIEF EXPLANATION OF THE DRAWINGS

FIG. 1 is a schematic construction view showing an operation lever structure of an embodiment 1.
FIG.2 is an explanation view showing a sliding state of a movable member of the operation lever structure.
FIG.3 is an explanation view showing a comparison of varied states of an entire lever length of the operation lever structure.
FIG.4 is an explanation view showing a comparison in an operation angle and a sliding amount between the operation lever structure and the conventional structure.
FIG.5 is a cross sectional view of a combination switch device using a conventional operation lever structure.
FIG.6 is a view explaining a slide amount of a movable member of a conventional operation lever structure.

### DETAILED DESCRIPTION OF THE PREFERRED EMBODIMENT

The present invention will be explained in detail based upon an embodiment of the present invention shown in accompanying drawings as follows.

### EMBODIMENT 1

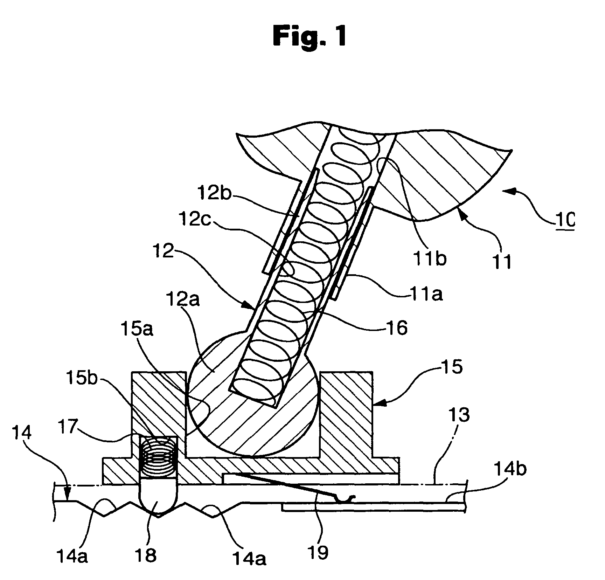

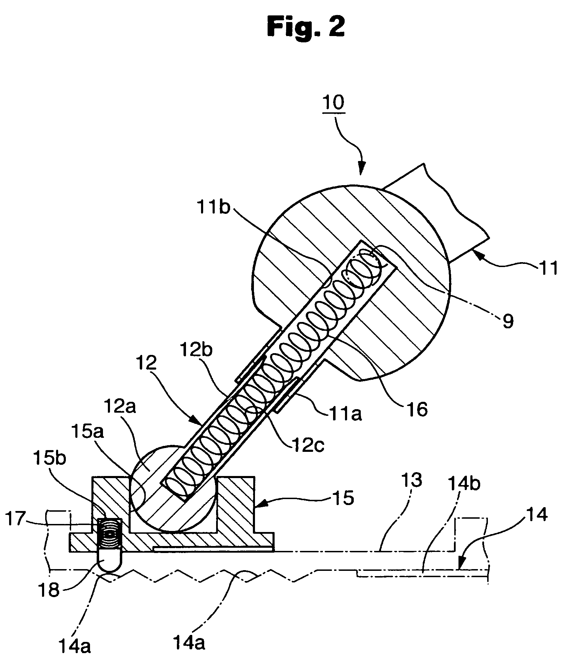

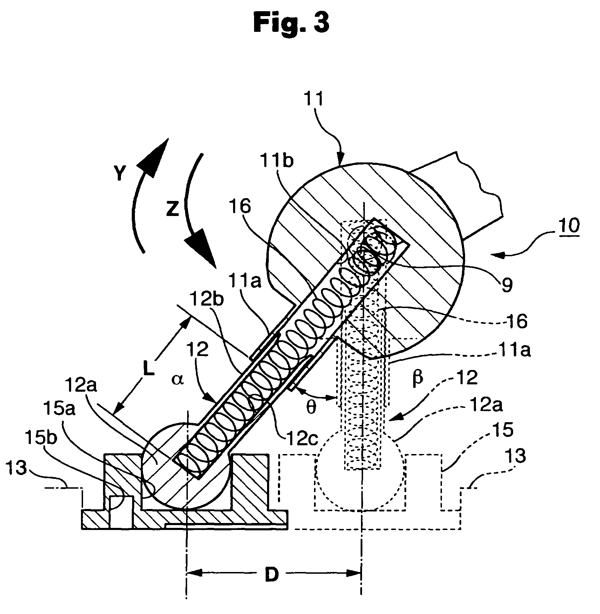

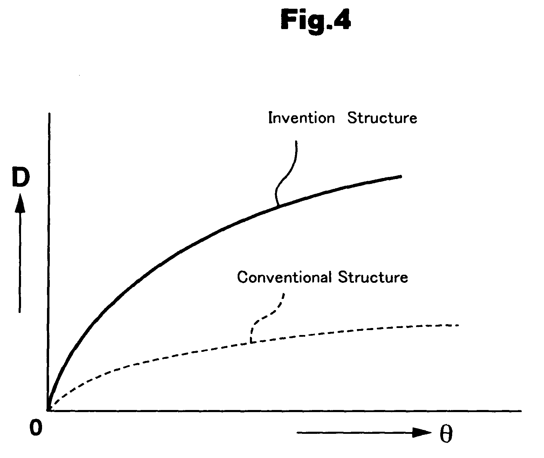

FIG. 1 is a schematic construction view showing an operation lever structure of an embodiment 1 according to the present invention, FIG.2 is an explanation view showing a sliding state of a movable member of the operation lever structure, FIG.3 is an explanation view showing a comparison of varied states of an entire lever length of the operation lever structure, FIG.4 is an explanation view showing a comparison in an operation angle and a sliding amount between the operation lever structure and the conventional structure. It is to be noted that a combination switch device for an automobile shown in FIG.5 is incorporated.

An operation lever structure shown in FIG.1 - 3, is used for a combination switch device 1 for an automobile and an operation lever 10 is supported by a support shaft to a casing 2, the lever 10 being rotated in the direction Y (FIG.5).

The operation lever 10 includes a lever main body 11 rotated in the direction Y by the support shaft 9, an arm 12 supported and slid in a hollow section 11b of the lever main body 11 a front end 12a of which is engaged in a concave section 15a of a movable member (movable body) 15 which slides along on a first base 13 located in a lower section in a casing 2, and a compression coil spring (an urging member) to regularly urge the front end 12a of the arm 12 in the direction of a concave section 15a of the movable member 15.

As shown in FIG.1 - 3, a cylindrical hollow section 11b is formed in the lever main body 11 from a front end 11a through the vicinity of a support shaft 9. And a cylindrical base end 12b of the arm 12 is slidingly supported in the hollow section 11b of the lever main body 11. And a columned hollow section 12c is formed in the arm 12 from the base end 12b of the arm 12 to the center of the spherical front end 12a. The compression coil spring 16 is interposed between in the hollow section 11b of the lever main body 11 and in the hollow section 12c of the arm 12. An extending length L of the arm 12 extended from the front end 11a of the lever main body 11 of the lever 10 varies corresponding to a rotating operation angle □ of the operation lever 10 by the compression coil spring 16.

Further, as shown in FIG.1, a cylindrical concave section 15b is formed in a lower section of the movable member 15. A restrained pin 18 is urged and extended in the concave section 15b by a restrained spring 17. The restrained pin 18 is adapted to be engaged in a plurality of restrained grooves 14a formed on a top face of a second base 14 located in a lower section in the casing 2. The restrained pin 18 forms a restrained mechanism in cooperation with the restrained grooves 14a, which is adapted to temporarily engages the movable member 15 at each rotating position of the operation lever 10.

Further , as shown in FIG. 1 and 2, a plurality of stationary contact points 14b for a combination switch are disposed on an upper face of the second base 14. And as shown in FIG.1,a movable contact point 19 contacting each of the above stationary contact points 14b is mounted in a lower section of the movable member 15.

According to the operation lever structure of the embodiment 1, as shown in FIG.3, when the operation lever 10 is operated to be rotated in the direction Z, the compression coil spring 16 is compressed, and the movable member 15 is traveled from α position to β position (stroke amount D) by the spherical front end 12a of the arm 12 traveled in the concave section 15a of the movable member 15. On this occasion, an extending length L of the arm 12 of the operation lever 10 varies with a rotating operation angle θ of the operation lever 10. Even if the operation lever 10 is operated to be rotated in the direction Y, the movable member 15 can be traveled by a stroke amount D the same as in the direction Z. A relation of the rotating operation angle θ of the operation lever 10 and the stroke amount D of the movable member 15 is shown in a solid line of FIG.4.

Thus the operation lever 10 includes the lever main body 11 rotated in the directions Y and Z by the support shaft 9, the arm 12 supported and slid in the hollow section 11b of the lever main body 11 the front end 12a of which is engaged in the concave section 15a of the movable member 15, and the compression coil spring to regularly urge the arm 12 in the direction of the concave section 15a of the movable member 15. Accordingly as shown in FIG.4, as compared to the conventional structure, an extending length L of the arm 12 of the operation lever 10 can be varied and is lengthened corresponding to a rotating operation angle θ of the lever main body 11 of the operation lever 10. Namely a stroke amount D of the movable member 15 can be lengthened depending on a length of the spring 16. As a result, a stroke amount D of the movable member 15 can be lengthened within a small space in the casing 2 to improve a design flexibility of the base 14.

In particular, the columned base 12b of the arm 12 is slidingly supported in the hollow section 11b of the lever main body 11, as well as the compression coil spring 16 is interposed between the hollow section 11b of the lever main body 11 and the hollow section 12c of the arm 12 whereby an extending length L of the arm 12 of the operation lever 10 can be varied with a rotating operation angle θ of the lever main body 11 of the operation lever 10, to securely increase a stroke amount D of the movable member 15 even in a small space.

In addition, according to the embodiment 1, a case where the operation lever is operated to be rotated around the support shaft 9 is explained, but the present invention may be applied to a case where the operation lever is operated to be rotated in the direction perpendicular to the support shaft 9, and is not limited to a case where the combination switch is used.

While only selected embodiment has been chosen to illustrate the present invention, it will be apparent to those skilled in the art from this disclosure that various changes and modifications can be made herein without departing from the scope of the invention as defined in the appended claims. Furthermore, the foregoing description of the embodiment according to the present invention is provided for illustration only, and not for the purpose of limiting the invention as defined by the appended claims and their equivalents.

## Claims

1. An operation lever structure comprising:
an operation lever supported by a support shaft to be rotated in a predetermined direction;
an arm extending from the operation lever; and
a movable body engaged with a front end of the arm to slidingly move the movable body in a predetermined direction by a rotating operation of the operation lever, wherein
a length from the front end of the arm to the support shaft varies with a rotating operation angle of the operation lever.

2. The operation lever structure as defined in claim 1, wherein
the operation lever includes:
a lever main body rotated in a predetermined direction by the support shaft;
the arm supported movably to the lever main body, a front end of the arm being engaged with the movable body; and
an urging member to regularly urge the arm in the direction of the movable body.

3. The operation lever structure as defined in claim 2, wherein
a first hollow section is formed in the lever main body, as well as a second hollow section is formed in at least a base side of the arm, the base side of the arm is supported in the first hollow section to be slid therein, and an urging member is interposed between the first hollow section and the second hollow section.
